# EUROPÄISCHE PATENTSCHRIFT

(11) **EP 1 547 992 B1**
(45) Veröffentlichungstag und Bekanntmachung des Hinweises auf die Patenterteilung: **16.01.2013**
(21) Anmeldenummer: 04029647.7
(22) Anmeldetag: 15.12.2004
(51) Int. Cl.: C04B 35/80, C04B 35/83, C04B 35/573, F16D 69/02, F16D 65/12, G02B 23/00

(54) **Verfahren zur Herstellung eines Bauteils aus einem Faserverbundwerkstoff und Faserverbundwerkstoff**
Process for producing a fibre reinforced composite material and the fibre reinforced composite material
Procédé pour fabriquer un matériau composite renforcé par des fibres et le matériau composite renforcé par des fibres

(30) Priorität: 18.12.2003 DE 10359484
(43) Veröffentlichungstag der Anmeldung: 29.06.2005
(73) Patentinhaber: Deutsches Zentrum für Luft- und Raumfahrt e.V., 51147 Köln (DE)
(72) Erfinder: Heidenreich, Bernhard, 71679 Asperg (DE); Krenkel, Walter, Dr., 71272 Renningen (DE); Krapf, Jürgen, 70327 Stuttgart (DE); Kriescher, Michael, 70197 Stuttgart (DE); Abu-El Hija, Husam, 70180 Stuttgart (DE)
(74) Vertreter: Hoeger, Stellrecht & Partner Patentanwälte

(56) Entgegenhaltungen:
- EP-A- 1 013 626
- EP-A- 1 098 161
- DE-A1- 19 962 831
- US-A- 3 734 797
- US-A- 3 969 124
- US-A- 4 166 145
- US-A- 5 418 063
- US-A- 6 051 167
- US-B1- 6 576 076

## Beschreibung

Die Erfindung betrifft ein Verfahren zur Herstellung eines Bauteils aus einem Faserverbundwerkstoff.

Ein solches Herstellungsverfahren ist beispielsweise aus der DE 44 38 455 C1 im Zusammenhang mit der Herstellung einer Reibeinheit zum reibenden Eingriff mit einen Gegenkörper bekannt. Als Vorprodukt wird ein mit ausgehärteten Polymeren durchsetzter Kohlenstoffaserkörper hergestellt.

Bei einem aus der DE 197 49 462 C1 bekannten Verfahren wird eine poröse Vorform eines Vorkörpers, welche Kohlenstoff-Fasern enthält, mit Polymerharz infiltriert und gehärtet. Der so enthaltene Grünkörper wird einer Pyrolyse zur Umwandlung des Polymerharzes in Kohlenstoff unterworfen.

Aus der US 6,051,167 ist ein Verfahren zur Herstellung einer Kohlenstoffverbundstruktur bekannt, bei welchem eine Matrix hergestellt wird, welche eine Mischung eines nicht kristallinen Kohlenstofffeststoffes umfasst, welcher in einem organischen Lösungsmittel löslich ist, ein Bindemittel umfasst, welches einen organischen Kohlenstoffprecursor umfasst und eine flüssige Phase aufweist, und ein organisches Lösungsmittel umfasst, welches den nicht kristallinen Kohlenstofffeststoff löst und mindestens teilweise auflöst, wobei der nicht kristalline Kohlenstofffeststoff Rest-Kohlenstoff-Wasserstoffbindungen enthält.

Der Erfindung liegt die Aufgabe zugrunde, ein alternatives Herstellungsverfahren bereitzustellen und einen neuen Werkstoff bereitzustellen.

Diese Aufgabe wird erfindungsgemäß dadurch gelöst, dass eine Faser-Harz-Mischung mit nicht ausgehärtetem Harz ausgehend vom A-Zustand und/oder B-Zustand des Harzes ohne vorherige Herstellung eines Grünkörpers im C-Zustand des Harzes pyrolysiert wird und das Werkstück nach dem Pyrolysevorgang siliciert wird, wobei die Aushärtung des Harzes beim Pyrolysevorgang erfolgt, bei der Pyrolyse die Faser-Harz-Mischung auf mindestens 200 °C erhitzt wird und die Pyrolyse unter Luftabschluss erfolgt.

Erfindungsgemäß wird ausgehend von einer Faser-Harz-Mischung, bei der es sich beispielsweise um ein Fasergerüst handeln kann, welches mit Harz getränkt ist, kein Härtungsvorgang zur Herstellung eines Grünkörpers durchgeführt, sondern die Aushärtung des Harzes und die Umwandlung des Harzes in Kohlenstoff erfolgt während der Pyrolyse.

Bei aus dem Stand der Technik bekannten Verfahren wird ein nicht unerheblicher Teil der Herstellungszeit und der Herstellungskosten für die Aushärtung des Harzes zur Herstellung des Vorkörpers benötigt. Durch das erfindungsgemäße Verfahren werden die entsprechenden Fertigungsschritte nicht mehr nötig.

Bei dem erfindungsgemäßen Verfahren sind bei der Pyrolyse hohe Aufheizraten möglich, so daß entsprechende Teile auch schneller hergestellt werden können. Da die Vernetzung (Aushärtung bzw. Polymerisation; Curing) während der Pyrolyse erfolgt, entstehen im Vergleich zu einem ausgehärteten Vorkörper geringere Eigenspannungen, was wiederum höhere Aufheizraten erlaubt.

Es ergibt sich eine porösere Struktur, da während der Aushärtung Gase im Material entstehen. Pyrolysegase, die bei der Umwandlung des Harzes als Kohlenstoff-Precursor entstehen, können durch die entstandene offenporige Struktur leichter abgeführt werden. Durch Variation beispielsweise des Drucks und der Aufheizrate bei der Pyrolyse und mit der Auswahl des Duromer-Harzes kann die Porosität für den herzustellenden Werkstoff eingestellt werden. Dadurch wiederum kann bei anschließender Silicierung der Si/SiC-Gehalt eingestellt werden. Es ist damit möglich, gezielt die Mikrostruktur und damit die Werkstoffeigenschaften einzustellen. Beispielsweise läßt sich ein höherer Si/SiC-Anteil erzielen, wodurch der so hergestellte Werkstoff eine höhere Wärmeleitfähigkeit aufweist.

Die Gefahr, dass Schichten delaminieren, ist verringert, da während des Pyrolysevorgangs durch die erhöhte Offenporigkeit (Pyrolyse-)Gase leichter abgeführt werden können.

Für einen Körper, welcher durch die Pyrolyse hergestellt wird, lässt sich bei dem erfindungsgemäßen Verfahren eine bessere Formtreue erreichen, als wenn die Pyrolyse an einem ausgehärteten Vorkörper durchgeführt wird; ein ausgehärteter Vorkörper weist hohe Eigenspannungen auf, die sich negativ auf die Formtreue auswirken. Die Eigenspannungen sind dagegen bei dem erfindungsgemäßen Verfahren minimiert. Die hohe Formtreue ist wiederum insbesondere dann vorteilhaft, wenn gekrümmte oder geschlossenen Formen wie Schalen oder Rohre hergestellt werden sollen.

Die Pyrolyse erfolgt ausgehend vom A-Zustand und/oder B-Zustand des Harzes. Im A-Zustand eines härtbaren Polykondensationsharzes ist dieses als Anfangszustand noch schmelzbar und in organischen Lösungsmitteln löslich. Bei Phenolharzen entspricht der A-Zustand den Resolen. Im B-Zustand ist der Kondensationsgrad fortgeschritten. Das Polykondensationsharz ist noch quellbar, aber nicht mehr löslich und kann nicht mehr schmelzen, aber unter Wärmezufuhr erweichen. Dadurch lässt sich insbesondere unter Druck eine plastische Verformung erreichen. Bei den Phenolharzen entspricht der B-Zustand dem Resitol. Prepregs liegen im B-Zustand vor. Im C-Zustand ist der Endzustand der Härtung erreicht, bei dem durch die Vernetzungsreaktionen das Harz ausgehärtet ist und völlig unlöslich ist und auch unter Wärmezufuhr nicht mehr erweichbar ist. Bei den Phenolharzen entspricht der C-Zustand des Resiten. Erfindungsgemäß erfolgt die Pyrolyse im A-Zustand und/oder B-Zustand. Es kann beispielsweise auch vorgesehen sein, dass vor der Pyrolyse das Harz In der Faser-Harz-Mischung von dem A-Zustand in den B-Zustand überführt wird, wobei es vorgesehen ist, dass der maximale Polymerisationsgrad höchstens 50 % bezogen auf den Endzustand (C-Zustand) beträgt.

Die Aushärtung des Harzes erfolgt beim Pyrolysevorgang, das heißt die (vollständige) Vernetzung des Harzes erfolgt während der Pyrolyse.

Insbesondere wird die Aushärtung des Harzes in den Pyrolysevorgang integriert. Die vollständige Polymerisation erfolgt dann während der Pyrolyse. Ebenso erfolgt dann die Umwandlung des Polymerharzes in Kohlenstoff zur Bildung eines Kohlenstoffmatrix während der Pyrolyse.

Insbesondere wird die Pyrolyse vorkörperfrei durchgeführt, das heißt die Pyrolyse wird nicht an einem ausgehärteten Vorkörper durchgeführt, sondern an einem Werkstück aus einer Faser-Harz-Mischung mit nicht ausgehärtetem Harz.

Bei der Pyrolyse wird die Faser-Harz-Mischung, auf mindestens 200 °C erhitzt und vorzugsweise auf Temperaturen größer als 300 °C erhitzt, wenn Phenolharze verwendet werden. Die Pyrolyse erfolgt unter LufEabschluss. Es kann vorgesehen sein, dass zumindest Teilschritte der Pyrolyse unter einer Schutzgasatmosphäre wie Stickstoffatmosphäre erfolgen oder im Vakuum erfolgten.

Ganz besonders vorteilhaft ist es, wenn bei der Pyrolyse ein Druck auf das Werkstück ausgeübt wird. Dadurch kann eine definierte Form für das Werkstück eingestellt werden. Bei dem Druck kann es sich beispielsweise um einen Gasdruck handeln, oder um eine mechanische Beschwerung, das heißt Auflegen von Gewichten auf ein Druckelement, welches auf das Werkstück aufgelegt ist, oder auch um den über thermische Ausdehnung ausgeübten Druck. Beispielsweise ist eine Form vorgesehen, in welche das Werkstück für die Pyrolyse eingelegt ist und/oder welche das Werkstück zumindest teilweise umgibt, beispielsweise in der Art eines Kerns. Durch die thermische Ausdehnung der Form wird ein entsprechender Druck ausgeübt. Bei der Form kann es sich beispielsweise um einen Graphitkern handeln, um den die Faser-Harz-Mischung gewickelt ist.

Durch definierte Einstellung des Drucks läßt sich die geometrische Struktur des durch die Pyrolyse hergestellten Werkstückes, wie beispielsweise eines C/C-Werkstückes, gezielt beeinflussen und einstellen.

Insbesondere wird der bei der Pyrolyse ausgeübte Druck gesteuert, um so eine gewünschte Mikrostruktur einzustellen.

Insbesondere wird die Faser-Harz-Mischung in eine Form eingelegt und/oder zumindest eine Form umgebend pyrolisyert. Dadurch läßt sich ein Körper mit definierter Gestalt erzeugen. Insbesondere läßt sich ein Druck über thermische Ausdehnung ausüben.

Es ist günstigerweise vorgesehen, daß die Faser-Harz-Mischung in einer Form und/oder zumindest teilweise eine Form umgebend pyrolysiert wird. Wenn beispielsweise die Faser-Harz-Mischung auf einem Kern als (Innen-) Form angeordnet wird, dann kann ein Rohr hergestellt werden.

Günstig ist es, wenn zwischen der Faser-Harz-Mischung und der Form ein Trennmittel angeordnet wird, wobei das Trennmittel eine oder mehrere Folienlagen umfassen kann. Dadurch läßt sich das Ankleben des Werkstückes an die Form verhindern. Bei entsprechender Wahl des Trennmittels ist es auch möglich, insbesondere wenn dieses schrumpfbar unter Erhitzung ist, daß eine thermische Ausdehnung der Form zumindest partiell kompensierbar ist. Dadurch läßt sich eine definierte geometrische Form des herzustellenden Bauteils einstellen und eine Überlastung während der Pyrolyse (mit der Gefahr des Platzens) verhindern. Insbesondere werden zwischen der Form und der Faser-Harz-Mischung ein oder mehrere Folienlagen angeordnet, welche als Trennmittel dienen.

Es ist dann vorteilhaft, wenn das Trennmittel so ausgebildet ist, daß es bei Erhitzung schrumpft. Dadurch lassen sich die Auswirkungen der thermischen Ausdehnung der Form zumindest partiell in ihren Auswirkungen auf das Werkstück kompensieren.

Es ist auch günstig, wenn eine Außenform vorgesehen wird. Über diese läßt sich die geometrische Form des herzustellenden Werkstücks einstellen, und zwar mit hoher Genauigkeit.

Es ist auch möglich, über die Außenform einen Druck auszuüben, um so beispielsweise einen definierten Druck während der Pyrolyse einstellen zu können, um so wiederum ein Werkstück mit definierten Abmessungen erhalten zu können; beispielsweise weist dann ein entsprechend hergestelltes Werkstück nur geringe Abweichungen bezüglich seiner Rundheit auf.

Günstig ist es, wenn die Abmessungen des herzustellenden Bauteils über das Schrumpfverhalten des Trennmittels in seiner Temperaturabhängigkeit in Relation zur thermischen Ausdehnung des Kerns eingestellt werden. Beispielsweise läßt sich dann dadurch die Dehnung des Werkstücks während des Pyrolyse einstellen, indem Folienlagen einer entsprechenden Dicke verwendet werden und eine entsprechende Anzahl an Folienlagen verwendet wird. Es lassen sich auch unterschiedliche Folienlagen mit unterschiedlichem Schrumpfverhalten während der Pyrolyse verwenden.

Es ist auch günstig, wenn die Faser-Harz-Mischung von einer oder mehreren Folienlagen umgeben wird, wobei die Folie bei Erhitzung schrumpft. Dadurch läßt sich ein Werkstück mit hoher Formtreue herstellen.

Es ist möglich, die Abmessungen des herzustellenden Bauteils über Druckausübung durch die Außenform einzustellen.

Bei einer Ausführungsform wird die Faser-Harz-Mischung zwischen zwei Formhälften eingelegt pyrolysiert, wobei die Formhälften von einer Außenform aus einem Material umgeben werden, welches einen geringeren Wärmeausdehnungskoeffizienten als das Material mindestens einer der Formhälften aufweist. Bei der Erhitzung während der Pyrolyse dehnen sich dann die Formhälften stärker aus als die Außenform. Dies führt dazu, daß die Formhälften einen Druck auf das Werkstück zwischen den Formhälften ausüben, wobei sich auf diese Weise mit relativ geringen Massen für die Formhälften ein hoher Druck ausüben läßt. Dieser Druck ist auch einstellbar über entsprechende Dimensionierung der Formhälften. Es kann auch vorgesehen sein, daß zwischen dem Werkstück und den Formhälften Folienlagen angeordnet sind. Durch entsprechende Auswahl der Folienlage insbesondere bezüglich Dicke der Folienschicht zwischen dem Werkstück und den Formhälften läßt sich dann auch der Druck auf das Werkstück während der Pyrolyse einstellen.

Ganz besonders vorteilhaft ist es, wenn das Temperaturprofil bei der Pyrolyse gesteuert wird. Insbesondere wird eine Aufheizrate gesteuert. Dadurch läßt sich eine definierte Struktur für einen Körper, welcher als Ergebnis der Pyrolyse erhalten wird, einstellen.

Insbesondere umfaßt die Faser-Harz-Mischung Kohlenstoffasern. Ferner ist die Matrixstruktur kohlenstoffbasiert, wobei insbesondere bei der Pyrolyse eine Umwandlung in Kohlenstoff in der Matrixstruktur erfolgt. Durch das erfindungsgemäße Verfahren läßt sich so ein C/C-Werkstoff herstellen.

Es kann vorgesehen sein, daß das Werkstück nach der Pyrolyse siliciert wird, um so einen C/C-SiC-Körper herzustellen. Es läßt sich so ein Bauteil mit keramischem Anteil herstellen; es handelt sich dann um ein carbidkeramisches Bauteil.

Es kann vorgesehen sein, daß für unterschiedliche Faserlagen in der Faser-Harz-Mischung unterschiedliche Harzsysteme verwendet werden. Dadurch ist es möglich, die Struktur des hergestellten Werkstoffes gezielt zu beeinflussen.

Ebenfalls ist es möglich, die Fasern in der Faser-Harz-Mischung thermisch vorzubehandeln, um auch so eine gezielte Beeinflussung der Struktur zu erzielen. Beispielsweise ist es möglich, ein C/C-SiC-Bauteil mit gradiertem Aufbau im C/C-Anteil und/oder SiC-Anteil herzustellen. Dadurch wiederum ist es möglich, beispielsweise einen Werkstoff mit hohem Keramikanteil in Bereichen und geringem Keramikanteil in anderen Bereichen herzustellen. In einem Bereich mit hohem Keramikanteil liegt eine hohe Abriebfestigkeit und eine hohe Steifigkeit vor sowie eine hohe Wärmeleitfähigkeit, während in einem Bereich mit geringem Keramikanteil eine hohe Bruchzähigkeit vorliegt und hohe Festigkeit vorliegt. Ein Anwendungsbeispiel ist ein Reibkörper (Reibeinheit), der an seiner Oberfläche eine hohe Abriebfestigkeit bei hoher Wärmeleitfähigkeit aufweisen soll und dessen Grundkörper zur Aufnahme der mechanischen Lasten eine hohe Festigkeit haben soll.

Erfindungsgemäß wird ein Faserverbundwerkstoff mit einem Faseranteil und einem Matrixantell bereitgestellt, welcher durch das Verfahren gemäß Anspruch 1 herstellbar ist.

Ein solcher Werkstoff weist eine durch die Aushärtung des Harzes während des Pyrolysevorgangs bestimmte Porenstruktur und Rissstruktur auf. Da die Pyrolyse an einem offenporigen System aufgrund des vorher nicht ausgehärteten Werkstücks erfolgt, können während der Pyrolyse entstehende Gase leichter abgeführt werden. Dies beeinflusst die Porenbildung und Rissbildung. Dieser Werkstoff weist eine höhere Porosität auf als aus dem Stand der Technik bekannte C/C-Körper.

In dem entsprechenden Werkstoff sind Poren und Risse gleichmäßiger verteilt, so dass der Werkstoff eine größere Homogenität aufweist.

Weitere Vorteile des erfindungsgemäßen Faserverbundwerkstoffs wurden bereits im Zusammenhang mit dem erfindungsgemäßen Verfahren erläutert.

Insbesondere ist der Werkstoff durch eine Porenstruktur gekennzeichnet, welche durch Aushärtung des Harzes bei der Pyrolyse hervorgerufen ist. Weiterhin ist der Werkstoff durch eine Rißstruktur gekennzeichnet, welche durch Aushärtung des Harzes bei der Pyrolyse hervorgerufen ist. Charakteristisch für diese Struktur ist, daß relativ breite Risse vorhanden sind.

Bei dem Werkstoff handelt es sich insbesondere um einen C/C-Werkstoff, bei dem die Faserstruktur Kohlenstoffasern umfaßt und insbesondere aus Kohlenstoffasern besteht und ferner die Matrixstruktur Kohlenstoff umfaßt und insbesondere aus Kohlenstoff besteht.

Es kann vorgesehen sein, daß der Werkstoff siliciert wird. Dadurch sind in dem Werkstoff Si/SiC-Bereiche und insbesondere keramische Bereiche gebildet. Insbesondere handelt es sich bei dem Werkstoff dann um einen C/C-SiC-Werkstoff. Durch die Silicierung wird beispielsweise die Wärmeleitfähigkeit erhöht. Ferner wird auch die Steifigkeit erhöht. Die Dichte ist ebenfalls erhöht. Auch die Härte ist erhöht. Es läßt sich erfindungsgemäß auch ein C/C-SiC-Werkstoff höherer Porosität herstellen im Vergleich zu aus dem Stand der Technik bekannten C/C-SiC-Werkstoffen.

Der erfindungsgemäße Werkstoff läßt sich vorteilhaft einsetzen für eine Reibeinheit zum reibenden Eingriff mit einem Gegenkörper und insbesondere für Bremsscheiben. Entsprechende Beispiele für Reibungseinheiten sind in der DE 44 38 465 C2, der DE 484 38 455 C1, der DE 197 49 462 C1 und der DE 100 45 881 A1 beschrieben. Auf diese Druckschriften wird ausdrücklich Bezug genommen.

Der erfindungsgemäße Werkstoff läßt sich vorteilhafterweise einsetzen für den Bau von Rohren, die insbesondere ausdehnungsarm sein sollen. Ein Anwendungsbeispiel ist ein Teleskoprohr.

Er läßt sich auch vorteilhaft einsetzen zur Herstellung gekrümmter Körper.

Die nachfolgende Beschreibung bevorzugter Ausführungsform dient im Zusammenhang mit der Zeichnung der näheren Erläuterung der Erfindung. Es zeigen:
- Figur 1: den schematischen Verfahrensablauf zur Herstellung eines Bauteils aus einem erfindungsgemäßen Faserverbundwerkstoff;
- Figur 2: einen Schnitt durch einen Körper aus einem erfindungsgemäßen C/C-Faserverbundwerkstoff mit geringer Porosität;
- Figur 3: einen Schnitt durch einen Körper aus einem erfindungsgemäßen C/C-SiC-Faserverbundwerkstoff auf der Basis eines C/C-Grundkörpers mit geringerer Porosität;
- Figur 4: einen Schnitt durch einen Körper aus einem erfindungsgemäßen C/C-Faserverbundwerkstoff mit hoher Porosität;
- Figur 5: einen Schnitt aus einem Körper aus einem erfindungsgemäßen C/C-SiC-Faserverbundwerkstoff auf der Basis eines C/C-Grundkörpers mit höherer Porosität;
- Figur 6: einen Schnitt durch einen Körper aus aus dem Stand der Technik bekannten C/C-Material;
- Figur 7: einen Schnitt durch einen Körper aus aus dem Stand der Technik bekannten C/C-SiC-Material;
- Figur 8: einen Schnitt durch einen Körper aus einem erfindungsgemäßen C/C-SiC-Faserverbundwerkstoff mit gradiertem Aufbau mit hohem Keramikgehalt in oberen Lagen und niedrigem Keramikgehalt in unteren Lagen;
- Figur 9: einen Schnitt durch einen Körper aus einem erfindungsgemäßen C/C-SiC-Faserverbundwerkstoff nach thermischer Nachbehandlung;
- Figur 10(a): schematisch ein erstes Ausführungsbeispiel einer Anordnung des Werkstoffs in einer Form zur Pyrolyse;
- Figur 10(b): einen vergrößerten Ausschnitt des Bereichs A gemäß Figur 10(a);
- Figur 11(a): ein zweites Ausführungsbeispiel einer Anordnung bei der Pyrolyse;
- Figur 11(b): einen vergrößerten Ausschnitt des Bereichs B gemäß Figur 11(a) und
- Figur 12: ein drittes Ausführungsbeispiel einer Anordnung für die Pyrolyse.

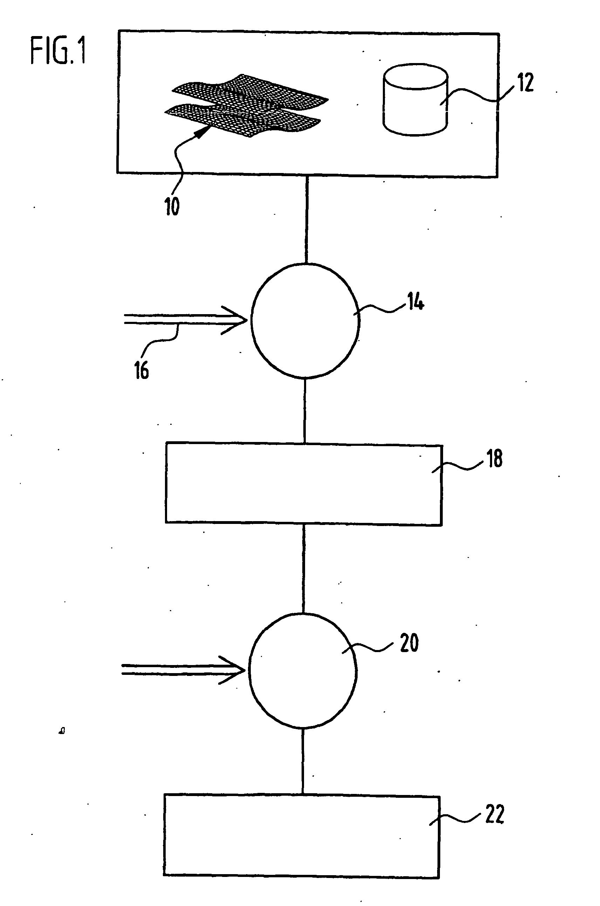

Erfindungsgemäß ist es vorgesehen, daß eine Faser-Harz-Mischung wie beispielsweise ein harzgetränktes Fasergerüst direkt ohne vorherige Harzaushärtung pyrolysiert wird. In Figur 1 ist das Fasergerüst schematisch mit 10 gezeigt. Die Harztränkung ist schematisch angedeutet durch einen Harzbehälter 12.

Das entsprechende Werkstück (das heißt die Faser-Harz-Mischung), welches dann der Pyrolyse unterworfen wird, kann hergestellt werden beispielsweise durch Tränken eines Fasergewebes mit Naßharz oder Mischen von Kurzfasern mit Naßharz oder durch Mischen von Kurzfasern mit Pulverharz. Es ist auch möglich, daß Prepreg-Lagen, die bereits mit Harz vorgetränkt sind, aufeinander gestapelt werden oder Prepreg-Lagen auf Graphitkerne gewickelt werden, um beispielsweise Rohre herzustellen. Es ist auch möglich, daß Laminate von Prepreg-Lagen in gekrümmter Form hergestellt werden, um so Bauteile mit Krümmungen herstellen zu können.

Bei den Fasern handelt es sich insbesondere um Kohlenstoffasern. Bei dem Harz handelt es sich vorzugsweise um ein Polykondensationsharz bzw. Polymerharz. Das Harz dient als Kohlenstoff-Precursor. Beispielsweise werden Phenolharze und/oder Epoxidharze eingesetzt.

Das Harz in der Faser-Harz-Mischung, welches dann später die Kohlenstoffmatrix in einem hergestellten Bauteil bildet, wird erfindungsgemäß vor der Pyrolyse nicht ausgehärtet, so daß die Polymerisation bzw. vollständige Vernetzung (Curing) in dem Pyrolyseschritt erfolgt.

Insbesondere wird das mit Harz getränkte Fasergerüst in dem A-Zustand des Harzes in den Pyrolysevorgang gegeben; im A-Zustand sind Polykondensationsharze (Duromer-Harze) noch schmelzbar und in organischen Lösungsmitteln löslich. Bei Phenolharzen entspricht der A-Zustand den Resolen.

Es kann grundsätzlich vorgesehen sein, daß das Harz vor dem Pyrolyseschritt von dem A-Zustand in den B-Zustand überführt wird. Im B-Zustand ist ein fortgeschrittener Kondensationsgrad härtbarer Harze erreicht, in dem diese noch quellbar sind, aber nicht mehr in organischen Lösungsmitteln löslich sind. Diese können auch nicht mehr schmelzen. Jedoch sind sie soweit unter Wärmezufuhr erweichbar, daß sie insbesondere unter Druck plastisch verformt werden können. Bei den Phenolharzen entspricht der B-Zustand dem Resitol.

Ausgehend von dem A-Zustand oder dem B-Zustand des Harzes wird der Pyrolysevorgang durchgeführt, wobei der Polymerisationsgrad vor der Pyrolyse höchstens 50 % bezogen auf den Endzustand ist. Der Endzustand des Harzes, der erfindungsgemäß bei der Pyrolyse erreicht wird, ist der C-Zustand; dort ist das Harz ausgehärtet und aufgrund von Vernetzungsreaktionen völlig unlöslich und auch unter Wärmezufuhr nicht mehr erweichbar. Bei den Phenolharzen entspricht der C-Zustand den Resiten.

Das mit Harz getränkte Fasergerüst wird in einem Pyrolyseschritt 14 unter Wärmezufuhr (angedeutet durch das Bezugszeichen 16) pyrolysiert. Es erfolgt dabei eine Aufheizung beispielsweise auf mindestens 300 °C unter Luftabschluß, wenn Phenolharze eingesetzt werden.

Bei der Verwendung von Epoxidharzen kann die Aufheiztemperatur niedriger liegen. Durch die Aufheizung wird eine schnelle Vernetzung des Harzes gewährleistet. Während der Pyrolyse erfolgt ein Übergang von dem A-Zustand über den B-Zustand zu dem C-Zustand um so schließlich einen Faserverbundwerkstoff 18 herzustellen. Bei Kohlenstoffasern als Ausgang und einer Kohlenstoffmatrix wird durch die Pyrolyse ein C/C-Körper erhalten. Während der Pyrolyse erfolgt die endgültige Vernetzung des Harzes und die Umwandlung in Kohlenstoff zur Bildung der (Kohlenstoff-) Matrixstruktur des Werkstoffs.

Erfindungsgemäß ist es vorgesehen, daß während der Pyrolyse 14 auf das mit Harz getränkte Fasergerüst ein definierter Druck ausgeübt wird, um eben einen Körper einer definierten Form zu erhalten. Beispielsweise kann dieser Druck über eine mechanische Beschwerung ausgeübt werden oder es kann eine Gasbeaufschlagung vorgesehen sein. Es ist auch möglich, das Fasergerüst mit dem getränkten Harz für den Pyrolysevorgang in einer Form zu plazieren, die entsprechend temperaturbeständig sein muß. Durch die Wände dieser Form wird bei thermischer Ausdehnung während des Pyrolysevorgangs 14 ein entsprechender Druck ausgeübt.

Die genannten Möglichkeiten zur Druckausübung sind auch kombinierbar. Weiter unten werden Beispiele für entsprechende Anordnungen beschrieben.

Es kann vorgesehen sein, daß ausgehend von dem durch Pyrolyse erhaltenen Faserverbundwerkstoff 18 anschließend eine Silicierung 20 durchgeführt wird, beispielsweise nach dem bekannten LSI-Verfahren. Diese Silicierung erfolgt bei hohen Temperaturen, beispielsweise oberhalb von 1400 °C unter Vakuumbedingungen. Es bildet sich dabei eine SiC-Matrix und es entsteht dann ein silicierter Faserverbundwerkstoff 22 mit keramischen Anteilen.

Es kann auch vorgesehen sein, daß vorher ein C/C-Körper mit Harz nachinfiltriert wird und eine weitere Pyrolyse durchgeführt wird. Dadurch kann die Matrix verdichtet werden. Die Vorgänge der Nachinfiltration und nochmaligen Pyrolyse können auch mehrfach durchgeführt werden.

Es ist möglich, mit geringem Siliciumangebot zu sillicieren oder nach der Silicierung eine Entsilicierung durchzuführen, um einen porösen C/C-SiC-Werkstoff zu erzeugen. Solche Werkstoffe lassen sich beispielsweise für Hochtemperaturfilter einsetzen.

Bei dem erfindungsgemäßen Verfahren wird vor der Pyrolyse kein Grünkörper (Formkörper) mit ausgehärtetem Harz hergestellt, sondern die Aushärtung des Harzes erfolgt bei dem Pyrolysevorgang 14. Dadurch wird ein zeitaufwendiger Fertigungsschritt, nämlich die Herstellung des Grünkörpers, eingespart.

Es ist dadurch auch möglich, höhere Aufheizraten für die Pyrolyse 14 zu verwenden, da aufgrund des geringen Vernetzungsgrades des Harzes geringere Eigenspannungen im Vergleich zu einem Grünkörper vorliegen. Dadurch wiederum läßt sich die Pyrolyse schneller durchführen und beispielsweise mit einer Zeitdauer von höchstens 22 Stunden durchführen. Es wird, wie unten noch näher erläutert wird, für den Faserverbundwerkstoff 18 eine porösere Struktur erreicht. Während des Pyrolysevorgangs können Gase aus dem entsprechenden Werkstück leichter abgeführt werden. Auch dies führt dazu, daß die Pyrolyse im Vergleich zur Pyrolyse an einem ausgehärteten Vorkörper schneller durchgeführt werden kann.

Es ist möglich, den Pyrolysevorgang 14 gesteuert durchzuführen und zwar insbesondere bezüglich Druck und Aufheizrate. Dadurch kann eine gezielte Porosität für den Faserverbundwerkstoff 18 eingestellt werden.

Bei entsprechender Druckbeaufschlagung des Werkstücks während der Pyrolyse ist eine hohe Formtreue für den entsprechend hergestellten Körper erreicht; diese Formtreue ist üblicherweise höher als bei einem ausgehärteten Faserverbundwerkstoff-Vorkörper, da in diesem hohe Eigenspannungen vorliegen.

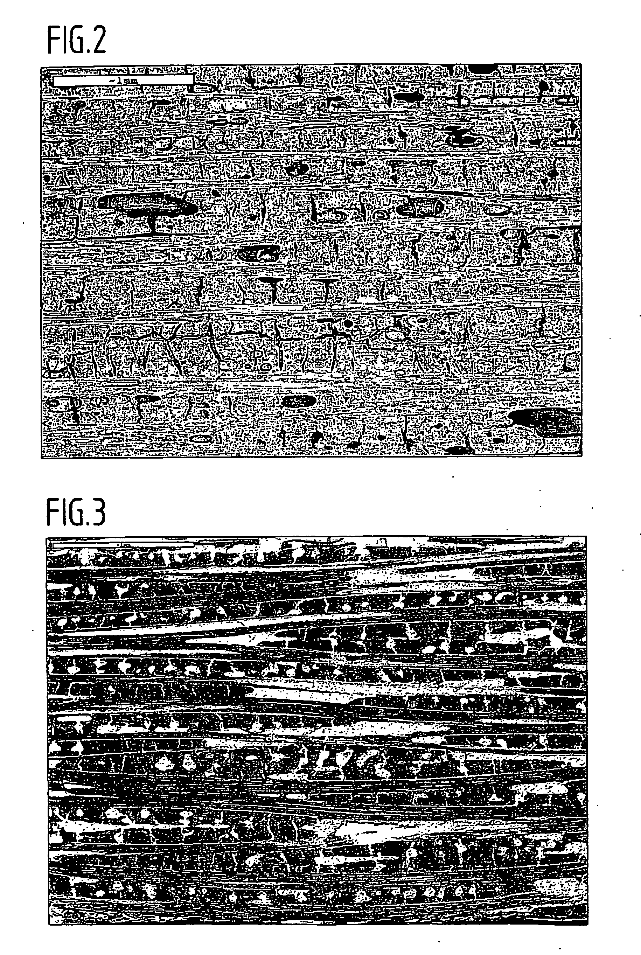

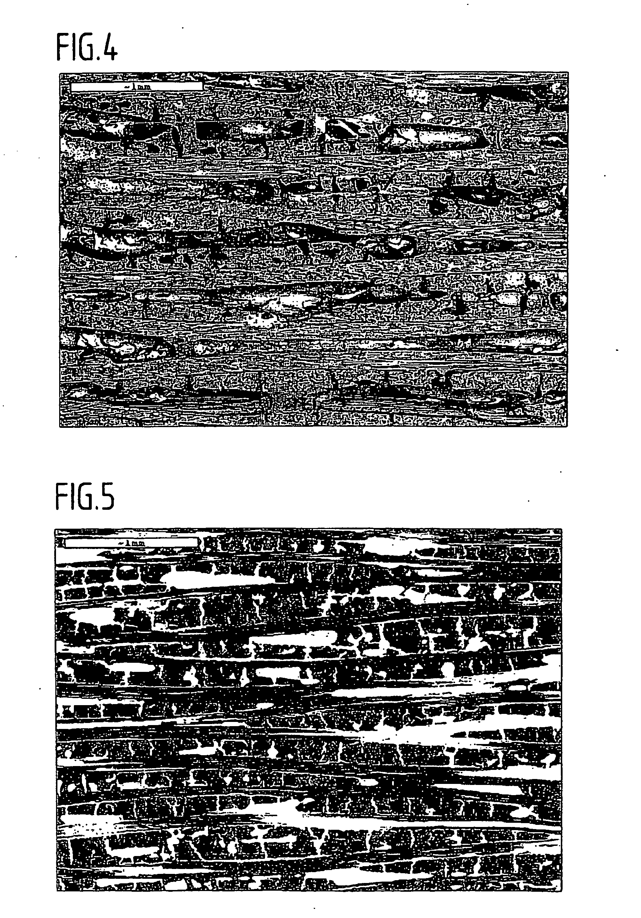

Durch das erfindungsgemäße Verfahren entsteht ein neuer Werkstoff mit einer charakteristischen Rißstruktur und Porenstruktur bzw. Blasenstruktur. In den Figuren 2 und 4 sind Schnitte eines mit einem solchen Werkstoff hergestellten Körpers gezeigt; diese Schnitte entsprechen einem Schnitt in einem Körper mit dem Faserverbundwerkstoff 18, wobei in Figur 2 ein Werkstoff mit geringerer Porosität im Vergleich zu dem Werkstoff gemäß Figur 4 gezeigt ist.

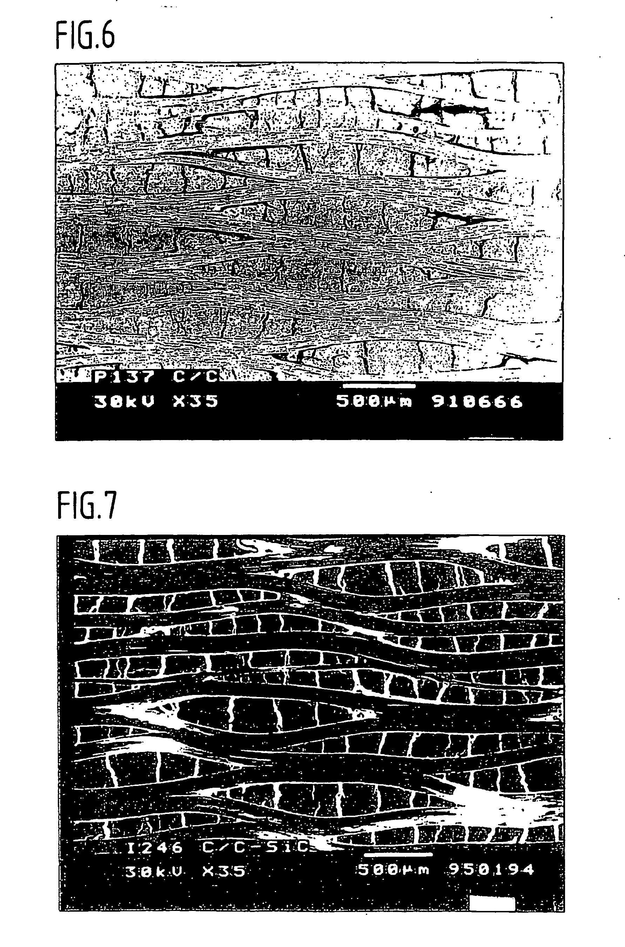

Figur 6 zeigt dagegen einen Schnitt durch einen Körper, welcher über die Pyrolyse eines ausgehärteten Vorkörpers (Grünkörpers) hergestellt wurde.

Die Figur 3 zeigt einen Faserverbundwerkstoff 22, welcher erfindungsgemäß hergestellt wurde, nach der Silicierung. Figur 5 zeigt einen entsprechenden Werkstoff, jedoch auf der Basis eines C/C-Grundkörpers mit höherer Porosität. Figur 7 zeigt einen Werkstoff, welcher herkömmlich hergestellt wurde, das heißt durch Pyrolyse eines ausgehärtetem Vorkörpers und anschließende Silicierung.

In dem Schnitt in Figur 6 ist die Faserstruktur und die Matrixstruktur deutlich erkennbar. Es bildet sich eine Rißstruktur aus, wobei Risse zwischen Faserschichten verlaufen. Bei der Silicierung (Figur 7) werden die Risse gewissermaßen mit Silicium aufgefüllt, wobei sich Siliciumcarbid bildet. Ferner werden Zwischenräume zwischen der Matrixstruktur und der Faserstruktur aufgefüllt.

Der neue erfindungsgemäße Werkstoff ist poröser als der aus dem Stand der Technik bekannte Werkstoff (vergleiche die Figuren 2, 4 mit der Figur 6). Da am Beginn der Pyrolyse das Harz noch nicht ausgehärtet ist, das heißt noch nicht vollständig vernetzt ist, können Gase austreten. Dies führt zu einer Porenbildung und Blasenbildung (siehe Figur 2 und 4) und auch die Rißstruktur ist modifiziert, wobei insbesondere breitere Risse auftreten.

Die entsprechenden Zwischenräume werden bei der Silicierung aufgefüllt (Figur 3 und Figur 5). Aufgrund der verstärkten Porenbildung, das heißt aufgrund der größeren Anwesenheit von Zwischenräumen, kann das Material im Vergleich zu aus dem Stand der Technik bekannten Werkstoffen mehr SiC aufnehmen, so daß nach der Silicierung ein vergrößerter Anteil von Si/SiC vorhanden ist. Dadurch hat der erfindungsgemäße Werkstoff eine höhere Wärmeleitfähigkeit.

Die Blasenbildung und damit Porenbildung sowie die Rißbildung kann durch Steuerung der Parameter der Pyrolyse und insbesondere der Heizrate und/ oder des Drucks und des Temperaturprofils eingestellt werden. Dadurch kann die Porosität im Werkstoff 18 eingestellt werden. Bei dem Werkstoff gemäß Figur 4 liegt eine höhere Porosität vor, das heißt der Anteil an Zwischenräumen ist vergrößert, als bei dem Werkstoff gemäß Figur 2. Entsprechend ist der Si/SiC-Anteil bei dem Werkstoff gemäß Figur 5 höher als bei dem Werkstoff gemäß Figur 3.

Während der Pyrolyse ergibt sich auch eine Formungsmöglichkeit für den Werkstoff zur Ausbildung eines entsprechenden Körpers.

Wie aus dem Vergleich der Figuren 2, 4 mit der Figur 6 bzw. der Figuren 3, 5 und der Figur 7 erkennbar ist, weist der erfindungsgemäße Werkstoff eine größere Homogenität auf.

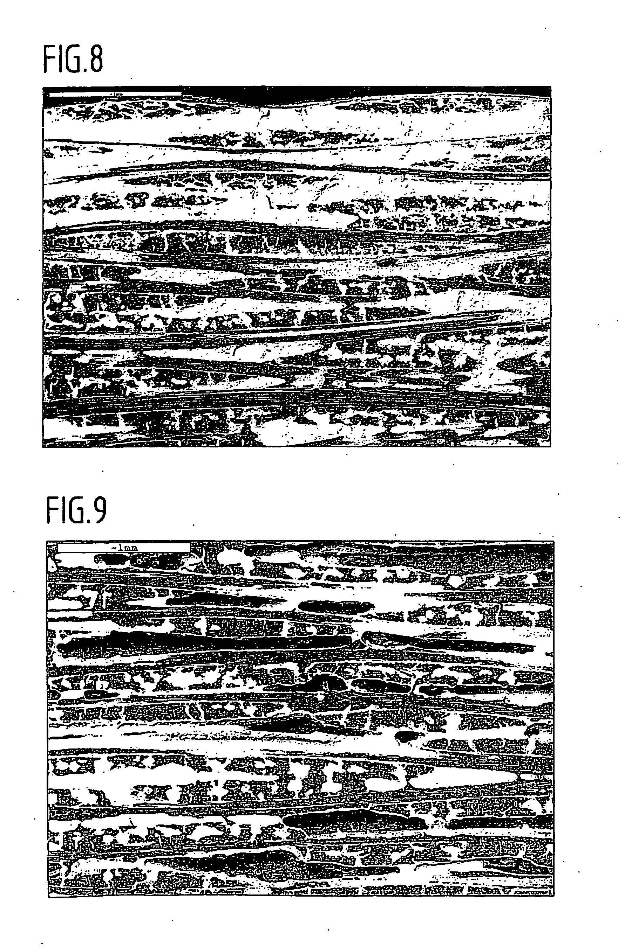

Es ist auch möglich, den Werkstoff so herzustellen, daß unterschiedliche Schichten unterschiedliche Eigenschaften haben. Ein entsprechendes Beispiel ist in Figur 8 gezeigt. Bei dem Beispiel gemäß Figur 8 wurde mit dem erfindungsgemäßen Verfahren durch unterschiedliche Harzsysteme in den Prepreg-Schichten ein C/C-SiC-Werkstoff mit räumlicher varianter Mikrostruktur hergestellt, bei dem die Phasenanteile unterschiedlich sind. Ein ähnliches Ergebnis läßt sich mit unterschiedlicher thermischer Vorbehandlung unterschiedlicher Gewebelagen erreichen. In Figur 8 ist ein Werkstoff gezeigt, welcher einen Bereich mit hohem Keramikgehalt aufweist und einen Bereich mit niedrigem Keramikgehalt hat.

In Figur 9 ist ein Werkstoff gezeigt, welcher thermisch entsiliciert wurde, um den Siliciumgehalt zu verringern und dadurch die Porosität zu erhöhen. Die Porenwände bestehen überwiegend aus SiC.

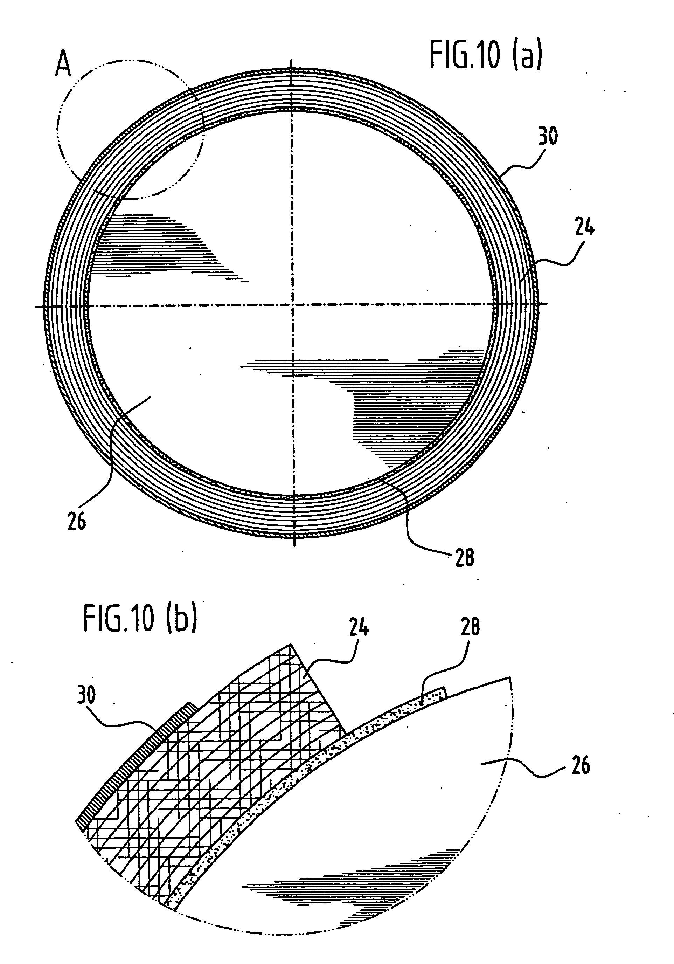

Bei einem ersten Ausführungsbeispiel einer Anordnung für die Pyrolyse wird, wie in den Figuren 10(a) und 10(b) gezeigt, Prepreg-Material 24 als Faser-Harz-Mischung auf einen Kern 26 gewickelt. Bei dem Kern handelt es sich beispielsweise um einen Graphitkern oder einen Stahlkern. Es läßt sich auf diese Weise insbesondere ein Rohr herstellen.

Vor dem Aufbringen des Prepreg-Materials 24 auf den Kern 26 wird auf dem Kern 26 ein Trennmittel 28 positioniert, wobei es sich insbesondere um mehrere Folienlagen eines Materials wie Kapton handelt. (Kapton ist ein Polyimidfilm; Kapton ist eine eingetragene Marke der E.I. DU PORT DE NEMOURS AND COMPANY.) Das Trennmittel 28 verhindert ein Ankleben des Werkstücks an dem Kern 26. Ferner läßt sich, wie unten noch näher beschrieben wird, über Schrumpfung des Trennmittels 28 die Wärmeausdehnung des Kerns in seiner Auswirkung auf das herzustellende Bauteil zumindest partiell kompensieren.

Weiterhin wird eine Außenform 30 vorgesehen, welche das Prepreg-Material 24 umgibt. Bei der Außenform kann es sich beispielsweise um ein Folienband handeln, um ein Folienband in Kombination mit einer Kohlenstoffaserwicklung, um C/C-Halbschalen, die das Prepreg-Material 24 umgeben oder um entsprechende Graphit-Halbschalen und dergleichen.

Diese Anordnung aus Prepreg-Material 24 auf den Kern 26 mit der Außenform 30 wird in dem Pyrolyseofen positioniert, um die Aushärtung des Harzes und die Pyrolyse durchzuführen.

Das Material des Kerns 26 weist einen erheblich höheren Wärmeausdehnungskoeffizienten auf als ein C/C-Material. Üblicherweise wird das Prepreg-Material 24 stramm um den Kern 26 gewickelt. Es besteht dadurch die grundsätzliche Gefahr, daß durch die thermische Ausdehnung des Kerns 26 bei der Pyrolyse dünnwandige Werkstücke überlastet werden und dies zu einem Platzen führt. Wenn die Folienlagen für die Außenform 30 und für das Trennmittel 28 so gewählt werden, daß diese unter Erhitzung schrumpfen, dann läßt sich zumindest partiell die Ausdehnung des Kerns 26 kompensieren. Über die Folienlagen läßt sich somit die Rundheit des Werkstücks während des Aushärtung des Harzes und zumindest am Anfang der Pyrolyse bei Temperaturen beispielsweise unter 400 °C sicherstellen. Bei entsprechender Wahl des Materials für die Folien wandeln sich diese unter Temperaturerhöhung zu Kohlenstoff-Lagen mit Dickenschwund. Dies bedeutet, daß das Werkstück nicht so stark gedehnt wird.

Insbesondere läßt sich die Dehnung des Werkstücks in Abhängigkeit von der Temperatur und über die Temperatur dadurch einstellen, daß die Dicke der Folienlagen über die Dicke einer Folienlage und Anzahl der Lagen eingestellt wird und/oder unterschiedliche Folienlagen mit unterschiedlichem Schrumpfverhalten während der Pyrolyse eingesetzt werden.

Es können dadurch die Abmessungen eines herzustellenden C/C-Körpers genau und mit hoher Formtreue eingestellt werden.

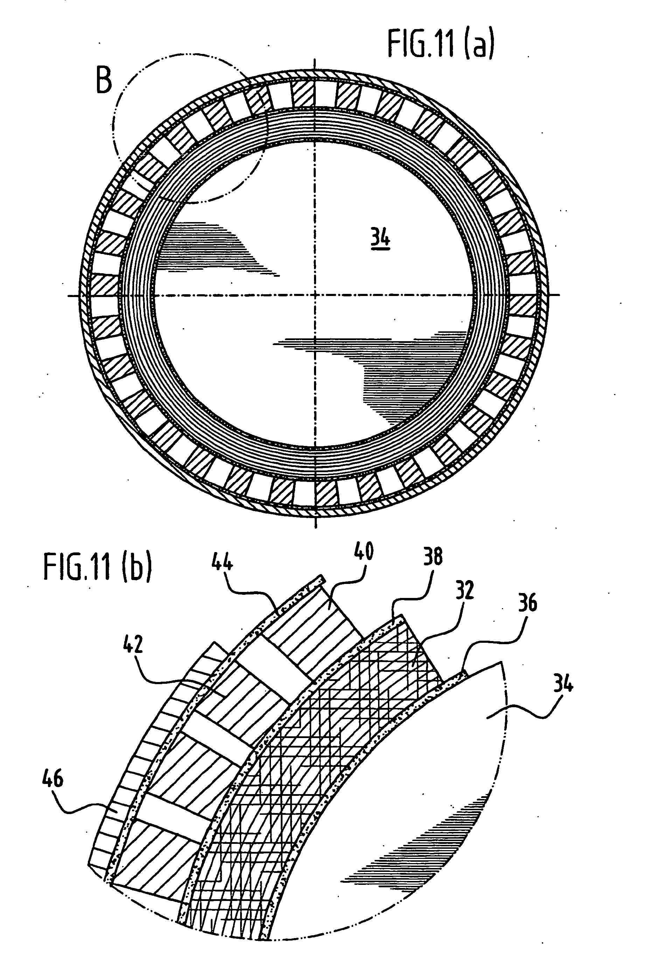

Bei einem zweiten Ausführungsbeispiel einer entsprechenden Pyrolyseanordnung, welche in den Figuren 11(a) und 11(b) gezeigt ist, werden Prepreg-Lagen 32 auf einen Kern 34 gewickelt. Auf den Kern 34 werden zuvor als Trennmittel eine oder mehrere Folienlagen 36 wie oben beschrieben aufgebracht. Auf die Prepreg-Lagen 32 wiederum wird eine oder werden mehrere Folienlagen 38 aufgelegt. Es wird dann eine erste Außenform 40 aufgesetzt, mittels welcher ein Außendruck auf das Prepregmaterial 32 ausübbar ist. Die erste Außenform 40 umfaßt beispielsweise einzelne Segmente 42 aus Graphit oder Stahl.

Auf der ersten Außenform 40 wird eine oder werden mehrere Folienlagen 44 aufgelegt. Die ganze Anordnung ist in einer zweiten Außenform 46 positioniert, welche aus einem Material mit kleinem Wärmeausdehnungskoeffizienten hergestellt ist, wie beispielsweise aus einem C/C-Material. Mit dieser Anordnung wird die Pyrolyse in einem Pyrolyseofen durchgeführt.

Der Außendruck, welcher auf die Prepreg-Lagen 32 insbesondere in radialer Richtung ausgeübt wird, ist über die (radiale) Dicke der ersten Außenform 40 und über die Dicke der Folienlagen 44 und 38 steuerbar. Es läßt sich dadurch zum einen der Druck zwischen der zweiten Außenform 46 und den Segmenten 42 steuern und zum anderen der Druck zwischen den Segmenten 42 und den Prepreglagen 32.

Über Aufbringung eines Drucks auf die Prepreg-Lagen 32 von außen her läßt sich somit während der Pyrolyse der auf das Werkstück ausgeübte Druck steuern.

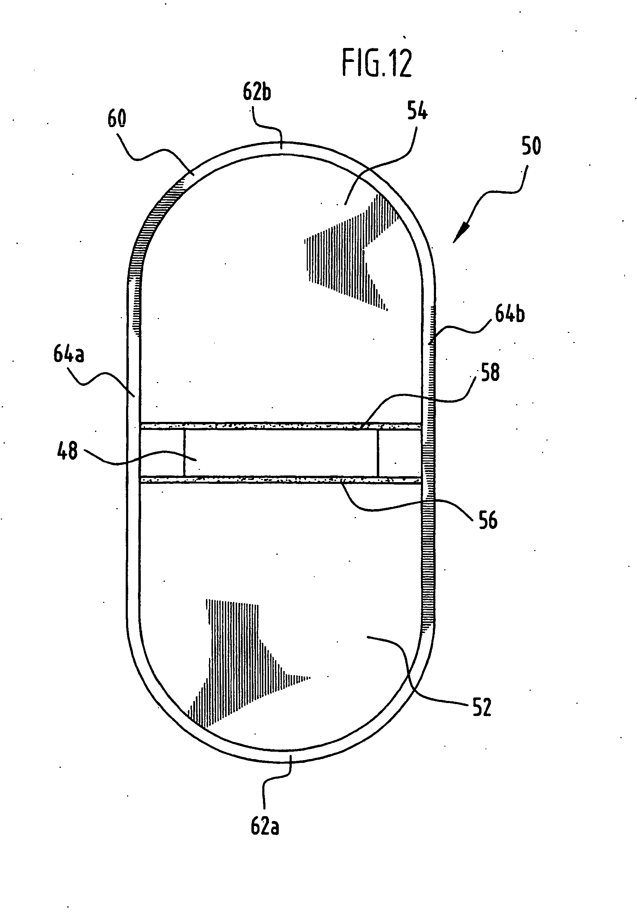

Bei einem dritten Ausführungsbeispiel einer Anordnung zur Durchführung der Pyrolyse, welches in Figur 12 schematisch gezeigt ist, ist ein Werkstück 48, welches ein Faser-Harz-Mischung ist und beispielsweise mittels Prepreg-Lagen hergestellt ist, in einer Form 50 positioniert, welche eine erste Formhälfte 52 und zweite Formhälfte 54 umfaßt. Zwischen dem Werkstück 48 und der ersten Formhälfte 52 und dem Werkstück 48 und der zweiten Formhälfte 54 ist jeweils ein Trennmittel 56, 58 angeordnet, welches insbesondere mittels oben beschriebenen Folienlagen gebildet wird.

Die Formhälften 52, 54 sind beispielsweise aus Graphit oder Stahl hergestellt; das entsprechende Material weist einen hohen Wärmeausdehnungskoeffizienten auf.

Die beiden Formhälften 52, 54 sind durch eine Außenform 60 umgeben, welche aus einem Material mit kleinem Wärmeausdehnungskoeffizienten und insbesondere erheblich kleinerem Wärmeausdehnungskoeffizienten des Materials für die Formhälften 52, 54 hergestellt ist. Beispielsweise ist die Außenform 60 aus einem C/C-Material hergestellt. Die Außenform 60 umgibt die Formhälften 52, 54 anliegend, so daß die Formhälften 52, 54 kein Spiel in der Außenform 60 haben. Insbesondere umgibt die Außenform 60 die Formhälften 52, 54 in der Art einer Bandage.

Bei der Erhitzung in einem Pyrolyseofen üben die Formhälften 52, 54 einen Druck auf das Werkstück 48 aus, da die Außenform 60 ein Ausweichen der Formhälften 52, 54 verhindert. Dieser Druck ist steuerbar über die Dicken der durch die Folienlagen 56, 58 gebildeten Folienschichten und/oder über die Abmessungen der Formhälften 52, 54 in einer Richtung quer zu einer Oberfläche des Werkstücks 48.

Die Außenform 60 weist vorzugsweise gegenüberliegenden kuppelförmige Wände 62a, 62b auf, welche durch gerade Wände 64a, 64b verbunden sind. Die Formhälften 52, 54 sind entsprechend angepaßt ausgebildet. Dadurch läßt sich ein Druck im wesentlichen senkrecht zur Oberfläche des Werkstücks 48 auf dieses ausüben.

Mittels der in die Außenform 60 "eingespannten" Formhälften 52, 54 läßt sich ein hoher Druck auf das Werkstück 48 ausüben, ohne daß im Vergleich zu einer Beschwerung hohe Massen eingesetzt werden müssen. Dieser Druck ist ferner steuerbar.

Als konkrete Beispiele wurden mit dem erfindungsgemäßen Verfahren ein dünnwandiges Rohr mit einem Innendurchmesser von 100 mm, einer Wandstärke von 2 mm und einer Länge von 110 mm hergestellt. Es wurde dabei ein Prepreg-Material mit Harz JK 60 und Gewebe ST462 verwendet. Ein Graphitkern wurde mit einer Trennfolie belegt und in eine Wickelmaschine eingespannt. Ein Prepreg-Zuschnitt wurde aufgewickelt. Anschließend wurde eine Spannfolie am Graphitkern angesetzt. Der Graphitkern wurde rotiert, um die Spannfolie mit gleichmäßigem Druck aufzuwickeln. Die Spannfolie wurde mit fünfzigprozentiger Überdeckung über die Prepreg-Wicklung geführt, bis die Prepreg-Wicklung vollständig belegt war.

Grundsätzlich ist es noch möglich, eine zusätzliche Bewicklung mit thermisch stabilen Kohlenstoffasern durchzuführen bzw. Graphitschalen zu verwenden und eine Kohlenstoffaserwicklung.

Anschließend wurde die Pyrolyse durchgeführt. Es wurde hochgeheizt mit einer Aufheizrate von 100 K/h auf eine Temperatur von 900 °C; die Aufheizung erfolgt in Stickstoff-Schutzgasatmosphäre. Es wurde dann mit einer Aufheizrate von 100 K/h auf eine Temperatur von 1650 °C unter Vakuumbedingungen aufgeheizt. Danach erfolgte ein Abkühlen mit einer Abkühlrate von - 300 K/h auf Raumtemperatur. Die Gesamtdauer des Pyrolysevorgangs betrug ca. 22 h.

Der so hergestellte Körper wurde entnommen und der Graphitkern sowie Reste von Trennfolie und Spannfolie entfernt. Es ergab sich ein Werkstoff mit einer Dichte ρ_{C/C} = 1,28 g/cm³ und einer Porosität (offenporig) e'_{C/C} = 21 %. e' ist definiert als das Verhältnis zwischen dem Volumen der offenen Poren eines porösen Körpers und seinem Gesamtvolumen, angegeben in Prozent des Gesamtvolumens. Es wurde dann ein entsprechendes Rohr auf die gewünschte Länge gesägt und die Silicierung mit 80%-igem Siliciumangebot bezogen auf die Masse des C/C-Grundkörpers durchgeführt. Das Endmaterial hatte eine Dichte von ρ_{C/C-SiC} = 2,024 g/cm³, einem Faservolumengehalt Φ_{F}, _{C/C-SiC} = 60 %. Die Porosität betrug e' = 1,6 %.

In einem weiteren Beispiel wurde ein dünnwandiges Rohr mit einem Innendurchmesser von 10 mm, einer Wandstärke von 0,7 mm und einer Länge 130 mm hergestellt. Als Ausgangsmaterial wurde ein einlagiger Flechtschlauch und das Harz JK 60 verwendet. Ein Graphitkern wurde mit einer Trennfolie belegt und ein Flechtschlauchzuschnitt wurde auf den Graphitkern aufgezogen. Der Flechtschlauch wurde an den Enden mit Klebeband fixiert und über einen Pinsel mit Harz getränkt. Eine Spannfolie wurde am Graphitkern angesetzt. Der Graphitkern wurde rotiert und die Spannfolie mit gleichmäßigem Druck aufgewickelt. Die Spannfolie wurde mit fünfzigprozentiger Überdeckung über den Flechtschlauch geführt, bis der Flechtschlauch vollständig bedeckt war.

Anschließend wurde die Pyrolyse wie oben beschrieben durchgeführt. Weiterhin wurde die Silicierung durchgeführt mit 150%-igem Siliciumangebot. Es ergab sich eine Dichte ρ_{C/C-SiC} = 1,952 g/cm³ und ein e'_{C/C-SiC} = 5,21 %.

In einem weiteren Beispiel wurde ein dickwandiges Rohr mit einem Innendurchmesser von 50 mm und einer Wandstärke von 5,75 mm hergestellt. Die Länge betrug 45 mm. Als Ausgangsmaterial wurde ein Prepreg-Material JK 60 / ST462 verwendet. Die Formgebung und die Pyrolyse wurden wie oben beschrieben durchgeführt. Bei der Silicierung wurden 75 Massenprozent Silicium angeboten.

Es ergab sich ein C/C-SiC-Werkstoff mit ρ_{C/C-SiC} = 2,067 g/cm³, Φ_{F}, _{C/C-SiC} = 60 % und e'_{C/C-SiC} = 1,21 %.

In einem weiteren Beispiel wurden Reibproben für eine Reibeinheit zum reibenden Eingriff mit einem Gegenkörper hergestellt. Eine solche Reibeinheit bildet insbesondere einen Reibbelag. Bezüglich Reibeinheiten wird auf die DE 44 38 456 C2, die DE 100 45 881 A1, die DE 44 38 455 C1 und die DE 197 49 462 C1 Bezug genommen.

Bei der konkreten Ausführungsform wurden verschiedene Epoxidharz-Prepreglagen und Phenolharz-Prepreglagen verwendet. Die Phenolharz-Prepregs unterscheiden sich in dem verwendeten Harztyp.

Die Prepreglagen wurden auf einer Graphitplatte bei Raumtemperatur gestapelt, um Platten der Größe 200 x 200 x 6,8 mm³ im Endzustand zu erhalten.

Der Aufbau betrug sechs Lagen Epoxidharz-Prepreg mit Gewebe St 814 und der Faser T300. Es wurden fünf Lagen Phenolharz-Prepregs mit dem Harz JK 25, dem Gewebe St462 und der Faser HTA gelegt. Darauf wiederum wurden fünf Lagen Phenolharz-Prepreg mit dem Harz JK 60, dem Gewebe St462 und der Faser HTA gelegt. Darauf wiederum wurden fünf Lagen Phenolharz-Prepreg mit dem Harz JK 25, den Gewebe St462 und der Faser HTA gelegt. Anschließend wurden sechs Lagen Epoxidharz-Prepreg mit dem Gewebe St814 und der Faser T300 aufgelegt. Der Aufbau wurde mit Graphitplatten beschwert, so daß sich eine Flächenpressung von 0,25 kg/cm² einstellt.

Es wurde dann eine Pyrolyse durchgeführt bis zu einer Endtemperatur von 900 °C, wobei die Dauer der Pyrolyse insgesamt 190 h betrug. Eine anschließende Nachpyrolyse wurde bis 1650 °C und einer Dauer von 37 h durchgeführt. Anschließend wurde eine Silicierung bis zu einer Endtemperatur von 1650 °C durchgeführt mit liegendem Werkstück. Das Siliciumangebot betrug 150 %.

Die Dichte betrug ρ_{C/C-SiC} = 2,14 g/cm³ und e'_{C/C-SiC} = 1,6 %. Der Anteil von Si/SiC in dem C/C-SiC-Werkstoff lag bei ca. 57,6 %. Die Festigkeit ergab sich im Dreipunktbiegeversuch zu 63,0 MPa und im Vierpunktbiegeversuch zu 46,6 MPa. Die Reibungskoeffizienten lagen für das Produkt aus Anpreßdruck p und Relativgeschwindigkeit v zu einem Stahlgegenkörper im Bereich für p x v zwischen 100 W/mm² und 700 W/mm² zwischen 0,6 und 0,2, wobei für kleinere Produkte p x v und für kleinere Geschwindigkeiten v sich größere Reibungskoeffizienten ergaben. Bei einem Leistungseintrag von p x v = 300 W/mm² ergab sich ein mittlerer Reibungskoeffizient von 0,4. v ist die maximale Prüfgeschwindigkeit, d.h. die Ausgangsgeschwindigkeit bei der Bremsung.

## Patentansprüche

1. Verfahren zur Herstellung eines Bauteils aus einem Faserverbundwerkstoff, bei dem eine Faser-Harz-Mischung mit nicht ausgehärtetem Harz ausgehend vom A-Zustand und/oder B-Zustand des Harzes ohne vorherige Herstellung eines Grünkörpers im C-Zustand des Harzes pyrolysiert wird und das Werkstück nach dem Pyrolysevorgang siliciert wird, wobei die Aushärtung des Harzes beim Pyrolysevorgang erfolgt, bei der Pyrolyse die Faser-Harz-Mischung auf mindestens 200 °C erhitzt wird und die Pyrolyse unter Luftabschluss erfolgt.

2. Verfahren nach Anspruch 1, **dadurch gekennzeichnet, dass** die Aushärtung des Harzes in den Pyrolysevorgang integriert wird.

3. Verfahren nach einem der vorangehenden Ansprüche, **dadurch gekennzeichnet, dass** die Pyrolyse vorkörperfrei durchgeführt wird.

4. Verfahren nach einem der vorangehenden Ansprüche, **dadurch gekennzeichnet, dass** bei der Pyrolyse ein Druck auf das Werkstück ausgeübt wird.

5. Verfahren nach Anspruch 4, **dadurch gekennzeichnet, dass** der Druck definiert eingestellt wird.

6. Verfahren nach Anspruch 4 oder 5, **dadurch gekennzeichnet, dass** bei der Pyrolyse der ausgeübte Druck gesteuert wird.

7. Verfahren nach einem der vorangehenden Ansprüche, **dadurch gekennzeichnet, dass** die Faser-Harz-Mischung in einer Form und/oder zumindest teilweise eine Form umgebend pyrolysiert wird.

8. Verfahren nach einem der vorangehenden Ansprüche, **dadurch gekennzeichnet, dass** die Faser-Harz-Mischung auf einen Kern gewickelt wird.

9. Verfahren nach Anspruch 7 oder 8, **dadurch gekennzeichnet, dass** zwischen der Faser-Harz-Mischung und der Form ein Trennmittei angeordnet wird.

10. Verfahren nach einem der Ansprüche 7 bis 9, **dadurch gekennzeichnet, dass** zwischen der Form und der Faser-Harz-Mischung eine oder mehrere Folienlagen angeordnet werden.

11. Verfahren nach Anspruch 9 oder 10, **dadurch gekennzeichnet, dass** das Trennmittel so ausgebildet wird, dass es bei Erhitzung schrumpft.

12. Verfahren nach Anspruch 11, **dadurch gekennzeichnet, dass** die Abmessungen des herzustellenden Bauteils über das Schrumpfverhalten des Trennmittels in seiner Temperaturabhängigkeit in Relation zur thermischen Ausdehnung der Form hergestellt werden.

13. Verfahren nach einem der Ansprüche 7 bis 12, **dadurch gekennzeichnet, dass** eine Außenform verwendet wird.

14. Verfahren nach Anspruch 13, **dadurch gekennzeichnet, dass** über die Außenform ein Druck ausgeübt wird.

15. Verfahren nach einem der Ansprüche 8 bis 14, **dadurch gekennzeichnet, dass** die Faser-Harz-Mischung von einer oder mehreren Follenlagen umgeben wird, wobei die Folie bei Erhitzung schrumpft.

16. Verfahren nach einem der Ansprüche 13 bis 15, **dadurch gekennzeichnet, dass** die Abmessungen des herzustellenden Bauteils über Druckausübung durch die Außenform eingestellt werden.

17. Verfahren nach einem der Ansprüche 7 bis 16, **dadurch gekennzeichnet, dass** die Faser-Harz-Mischung zwischen zwei Formhälften eingelegt pyrolysiert wird, wobei die Formhälften von einer Außenform aus einem Material umgeben werden, welches einen geringeren Wärmeausdehnungskoeffizienten als das Material mindestens einer der Formhälften aufweist.

18. Verfahren nach Anspruch 17, **dadurch gekennzeichnet, dass** zwischen der Faser-Harz-Mischung und den Formhälften jeweils mindestens eine Folienlage angeordnet wird.

19. Verfahren nach Anspruch 17 oder 18, **dadurch gekennzeichnet, dass** der auf das Werkstück ausgeübte Druck über die Temperatur und/oder die Dicke von Folienlagen zwischen dem Werkstück und den Formhälften und/oder die Abmessungen der Formhälften steuerbar ist.

20. Verfahren nach einem der vorangehenden Ansprüche, **dadurch gekennzeichnet, dass** das Temperaturprofil bei der Pyrolyse gesteuert wird.

21. Verfahren nach einem der vorangehenden Ansprüche, **dadurch gekennzeichnet, dass** die Faser-Harz-Mischung Kohtenstofffasern umfasst.

22. Verfahren nach einem der vorangehenden Ansprüche, **dadurch gekennzeichnet, dass** für unterschiedliche Faserlagen in der Faser-Harz-Mischung unterschiedliche Harzsysteme verwendet werden.

23. Verfahren nach einem der vorangehenden Ansprüche, **dadurch gekennzeichnet, dass** die Fasern in der Faser-Harz-Mischung thermisch vorbehandelt werden.

24. Faserverbundwerkstoff mit einem Faseranteil und einem Matrixantell, herstellbar nach dem Verfahren gemäß Anspruch 1.

25. Faserverbundwerkstoff nach Anspruch 24, **gekennzeichnet durch** eine Porenstruktur, welche **durch** Aushärtung des Harzes bei der Pyrolyse hervorgerufen ist.

26. Faserverbundwerkstoff nach Anspruch 24 oder 25, **gekennzeichnet durch** eine Rissstruktur, welche **durch** Aushärtung des Harzes bei der Pyrolyse hervorgerufen ist.

27. Faserverbundwerkstoff nach einem der Ansprüche 24 bis 26, **dadurch gekennzeichnet, dass** der Werkstoff ein C/C-SiC-Werkstoff ist.

28. Verwendung des Werkstoffs gemäß einem der Ansprüche 24 bis 27 für eine Reibeinheit zum reibenden Eingriff mit einem Gegenkörper.

29. Verwendung des Werkstoffs gemäß einem der Ansprüche 24 bis 28 für eine Bremsscheibe.

30. Verwendung des Werkstoffs gemäß einem der Ansprüche 24 bis 27 für ein Rohr.

31. Verwendung des Werkstoffs gemäß einem der Ansprüche 24 bis 27 für einen gekrümmten Körper.

## Claims

1. Method of manufacturing a component made of a fibre composite material, wherein a fibre-resin mixture with uncured resin is pyrolized starting from the A-state and/or B-state of the resin without prior fabrication of a green body in the C-state of the resin, and the work piece is siliconized after the pyrolysis process, wherein the resin is cured during the pyrolysis process, the fibre-resin mixture is heated to at least 200° C during the pyrolysis, and the pyrolysis is carried out with the exclusion of air.

2. Method in accordance with claim 1, **characterized in that** the curing of the resin is integrated into the pyrolysis process.

3. Method in accordance with any one of the preceding claims, **characterized in that** the pyrolysis is carried out without a preform.

4. Method in accordance with any one of the preceding claims, **characterized in that** a pressure is applied to the work piece during the pyrolysis.

5. Method in accordance with claim 4, **characterized in that** the pressure is set in a defined manner.

6. Method in accordance with claim 4 or 5, **characterized in that** the pressure applied is controlled during the pyrolysis.

7. Method in accordance with any one of the preceding claims, **characterized in that** the fibre-resin mixture is pyrolized in a mould and/or at least partially surrounding a mould.

8. Method in accordance with any one of the preceding claims, **characterized in that** the fibre-resin mixture is wound onto a core.

9. Method in accordance with claim 7 or 8, **characterized in that** a release agent is arranged between the fibre-resin mixture and the mould.

10. Method in accordance with any one of claims 7 to 9, **characterized in that** one or more film layers are arranged between the mould and the fibre-resin mixture.

11. Method in accordance with claim 9 or 10, **characterized in that** the release agent is configured so as to shrink when heated.

12. Method in accordance with claim 11, **characterized in that** the dimensions of the component to be manufactured are produced via the shrinkage behaviour of the release agent in its temperature dependence in relation to the thermal expansion of the mould.

13. Method in accordance with any one of claims 7 to 12, **characterized in that** an outer mould is used.

14. Method in accordance with claim 13, **characterized in that** a pressure is applied via the outer mould.

15. Method in accordance with any one of claims 8 to 14, **characterized in that** the fibre-resin mixture is surrounded by one or more film layers, and the film shrinks when heated.

16. Method in accordance with any one of claims 13 to 15, **characterized in that** the dimensions of the component to be manufactured are set by pressure being applied by the outer mould.

17. Method in accordance with any one of claims 7 to 16, **characterized in that** the fibre-resin mixture is pyrolized while placed between two mould halves, the mould halves being surrounded by an outer mould made of a material which has a lower coefficient of thermal expansion than the material of at least one of the mould halves.

18. Method in accordance with claim 17, **characterized in that** at least one film layer is arranged between the fibre-resin mixture and each of the mould halves.

19. Method in accordance with claim 17 or 18, **characterized in that** the pressure applied to the work piece is controllable via the temperature and/or the thickness of film layers between the work piece and the mould halves and/or the dimensions of the mould halves.

20. Method in accordance with any one of the preceding claims, **characterized in that** the temperature profile is controlled during the pyrolysis.

21. Method in accordance with any one of the preceding claims, **characterized in that** the fibre-resin mixture comprises carbon fibres.

22. Method in accordance with any one of the preceding claims, **characterized in that** different resin systems are used for different fibre layers in the fibre-resin mixture.

23. Method in accordance with any one of the preceding claims, **characterized in that** the fibres in the fibre-resin mixture are thermally pre-treated.

24. Fibre composite material having a fibre component and a matrix component, producible in accordance with the method in accordance with claim 1.

25. Fibre composite material in accordance with claim 24, **characterized by** a pore structure which is caused by curing the resin during the pyrolysis.

26. Fibre composite material in accordance with claim 24 or 25, **characterized by** a crack structure which is caused by curing the resin during the pyrolysis.

27. Fibre composite material in accordance with any one of claims 24 to 26, **characterized in that** the material is a C/C-SiC material.

28. Use of the material in accordance with any one of claims 24 to 27 for a friction unit for frictional engagement with a counter-body.

29. Use of the material in accordance with any one of claims 24 to 28 for a brake disk.

30. Use of the material in accordance with any one of claims 24 to 27 for a pipe.

31. Use of the material in accordance with any one of claims 24 to 27 for a curved body.

## Revendications

1. Procédé de fabrication d'un composant en matériau composite renforcé par des fibres, où un mélange de résine et de fibres avec une résine non durcie est pyrolysé à partir d'un état A et/ou d'un état B de la résine sans fabrication préalable d'un corps de base à un état C de la résine, et où la pièce est silicée après la pyrolyse, le durcissement de la résine étant réalisé lors de la pyrolyse, le mélange de résine et de fibres étant chauffé à au moins 200 °C lors de la pyrolyse et la pyrolyse ayant lieu sous exclusion d'air.

2. Procédé selon la revendication 1, **caractérisé en ce que** le durcissement de la résine est intégré à la pyrolyse.

3. Procédé selon l'une des revendications précédentes, **caractérisé en ce que** la pyrolyse est effectuée en l'absence de corps préalable.

4. Procédé selon l'une des revendications précédentes, **caractérisé en ce qu'**une pression est exercée sur la pièce lors de la pyrolyse.

5. Procédé selon la revendication 4, **caractérisé en ce que** la pression est réglée de manière définie.

6. Procédé selon la revendication 4 ou la revendication 5, **caractérisé en ce que** la pression exercée est commandée lors de la pyrolyse.

7. Procédé selon l'une des revendications précédentes, **caractérisé en ce que** le mélange de résine et de fibres est pyrolysé dans un moule et/ou en entourant au moins partiellement un moule.

8. Procédé selon l'une des revendications précédentes, **caractérisé en ce que** le mélange de résine et de fibres est enroulé sur un noyau.

9. Procédé selon la revendication 7 ou la revendication 8, **caractérisé en ce qu'**un moyen de séparation est disposé entre le mélange de résine et de fibres et le moule.

10. Procédé selon l'une des revendications 7 à 9, **caractérisé en ce qu'**une ou plusieurs couches de films sont disposées entre le moule et le mélange de résine et de fibres.

11. Procédé selon la revendication 9 ou la revendication 10, **caractérisé en ce que** le moyen de séparation est réalisé de manière à se contracter par chauffage.

12. Procédé selon la revendication 11, **caractérisé en ce que** les dimensions du composant à fabriquer sont obtenues à partir du comportement de contraction du moyen de séparation en fonction de sa température et de la dilatation thermique du moule.

13. Procédé selon l'une des revendications 7 à 12, **caractérisé en ce qu'**il est prévu un moule extérieur.

14. Procédé selon la revendication 13, **caractérisé en ce qu'**une pression est exercée par le moule extérieur.

15. Procédé selon l'une des revendications 8 à 14, **caractérisé en ce que** le mélange de résine et de fibres est entouré d'une ou de plusieurs couches de films, le film se contractant au chauffage.

16. Procédé selon l'une des revendications 13 à 15, **caractérisé en ce que** les dimensions du composant à fabriquer sont réglées par application de pression par le moule extérieur.

17. Procédé selon l'une des revendications 7 à 16, **caractérisé en ce que** le mélange de résine et de fibres est pyrolysé entre deux moitiés de moule, lesdites moitiés de moule étant entourées par un moule extérieur en matériau présentant un coefficient de dilatation thermique inférieur à celui du matériau d'au moins une des moitiés de moule.

18. Procédé selon la revendication 17, **caractérisé en ce qu'**au moins une couche de film est disposée entre le mélange de résine et de fibres et les moitiés de moule.

19. Procédé selon la revendication 17 ou la revendication 18, **caractérisé en ce que** la pression exercée sur la pièce peut être commandée au moyen de la température et/ou de l'épaisseur des couches de films entre la pièce et les moitiés de moule et/ou des dimensions des moitiés de moule.

20. Procédé selon l'une des revendications précédentes, **caractérisé en ce que** le profil de température est commandé lors de la pyrolyse.

21. Procédé selon l'une des revendications précédentes, **caractérisé en ce que** le mélange de résine et de fibres comprend des fibres de carbone.

22. Procédé selon l'une des revendications précédentes, **caractérisé en ce que** différents systèmes de résine sont utilisés pour différentes couches de fibres dans le mélange de résine et de fibres.

23. Procédé selon l'une des revendications précédentes, **caractérisé en ce que** les fibres sont pré-traitées thermiquement dans le mélange de résine et de fibres.

24. Matériau composite renforcé par des fibres avec une part de fibres et une part de matrice, pouvant être fabriqué avec le procédé selon la revendication 1.

25. Matériau composite renforcé par des fibres selon la revendication 24, **caractérisé par** une structure poreuse obtenue par durcissement de la résine lors de la pyrolyse.

26. Matériau composite renforcé par des fibres selon la revendication 24 ou la revendication 25, **caractérisé par** une structure craquelée obtenue par durcissement de la résine lors de la pyrolyse.

27. Matériau composite renforcé par des fibres selon l'une des revendications 24 à 26, **caractérisé en ce que** le matériau est un matériau C/C-SiC.

28. Utilisation du matériau selon l'une des revendications 24 à 27 pour une unité de friction, pour un engagement par friction avec un corps opposé.

29. Utilisation du matériau selon l'une des revendications 24 à 28 pour un disque de frein.

30. Utilisation du matériau selon l'une des revendications 24 à 27 pour un tube.

31. Utilisation du matériau selon l'une des revendications 24 à 27 pour un corps courbé.
